# EUROPEAN PATENT SPECIFICATION

(11) **EP 1 110 825 B1**
(45) Date of publication and mention of the grant of the patent: **19.11.2003**
(21) Application number: 00127730.0
(22) Date of filing: 18.12.2000
(51) Int. Cl.: B60R 21/22

(54) **An airbag safety restraint for a motor vehicle**
Rückhalte-Luftsack für ein Kraftfahrzeug
Système de retenue par coussin gonflable pour véhicule automobile

(30) Priority: 21.12.1999 IT TO991123
(43) Date of publication of application: 27.06.2001
(73) Proprietor: FIAT AUTO S.p.A., 10135 Torino (IT)
(72) Inventor: Rosti, Rossini, Lorenzo, 20145 Milano (IT)
(74) Representative: Quinterno, Giuseppe

(56) References cited:
- EP-A- 0 847 904
- WO-A-00/41919
- WO-A-99/55556
- DE-A- 19 745 872
- US-A- 5 470 103

## Description

The present invention relates to a safety restraint for protecting a person in the passenger compartment of a motor vehicle.

More specifically, the subject of the invention is a safety restraint comprising:
a curtain-type airbag which is housed, in a stowage configuration, in a housing formed along an edge of the passenger compartment roof and which can be inflated in order to adopt a configuration in which it is unfolded downwards, as a result of the activation of an associated gas generator.

Airbag safety restraints of this type are known for example from the generic EP-A-847 904 and have been proposed for fitting along a portion of the side edge of a motor-vehicle roof. In the unfolded configuration, the airbag of a restraint of this type is unfolded and falls down beside the inside of a door or side panel of the motor vehicle to protect the person occupying the adjacent seat in the event of a side impact.

These safety restraints have been proposed for fitting in combination with conventional airbags which are located at the front, that is, for inflation in front of the occupant of a seat.

The object of the present invention is to provide a safety restraint of the above-mentioned type which can protect a seat occupant both in the event of a front or rear impact, and in the event of a side impact.

This and other objects are achieved, according to the invention, by a safety restraint, in which the housing and the airbag stowed therein extend along an angled or arcuate line, partially along a longitudinal edge of the passenger compartment roof and partially transversely relative to the longitudinal edge, and in that the airbag includes a lower tubular element which, when inflated, can expand radially and contract longitudinally in a manner such that, in the inflated and unfolded condition, it brings about a shortening of the lower side of the airbag and is disposed substantially along a diagonal or a chord, at an inclination to the longitudinal axis of the motor vehicle.

Further characteristics and advantages of the invention will become clear from the following detailed description, given purely by way of non-limiting example with reference to the appended drawings, in which:
Figure 1 is a plan view of a motor car provided with four safety restraints according to the invention,
Figure 2 is a partial perspective view showing a safety restraint according to the invention in the unfolded and inflated configuration,
Figure 3 is a plan view of the car shown in Figure 1 with the safety restraints shown in the inflated and unfolded condition, and
Figure 4 is a plan view of another motor car provided with four safety restraints according to the invention, fitted in an alternative arrangement.

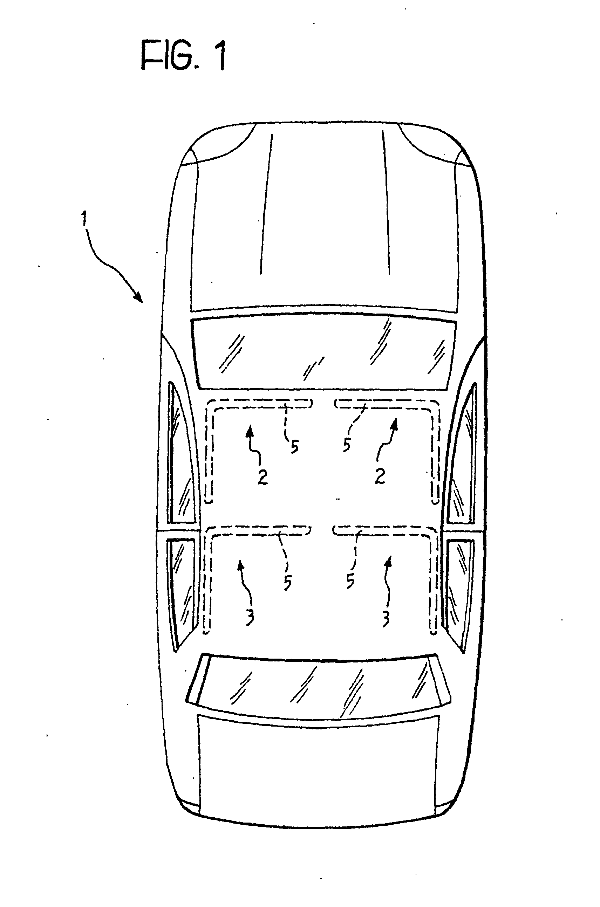

In Figures 1 to 3, a motor car is indicated 1. Two front safety restraints 2 and two rear safety restraints 3 are fitted in the roof of the passenger compartment of the motor car.

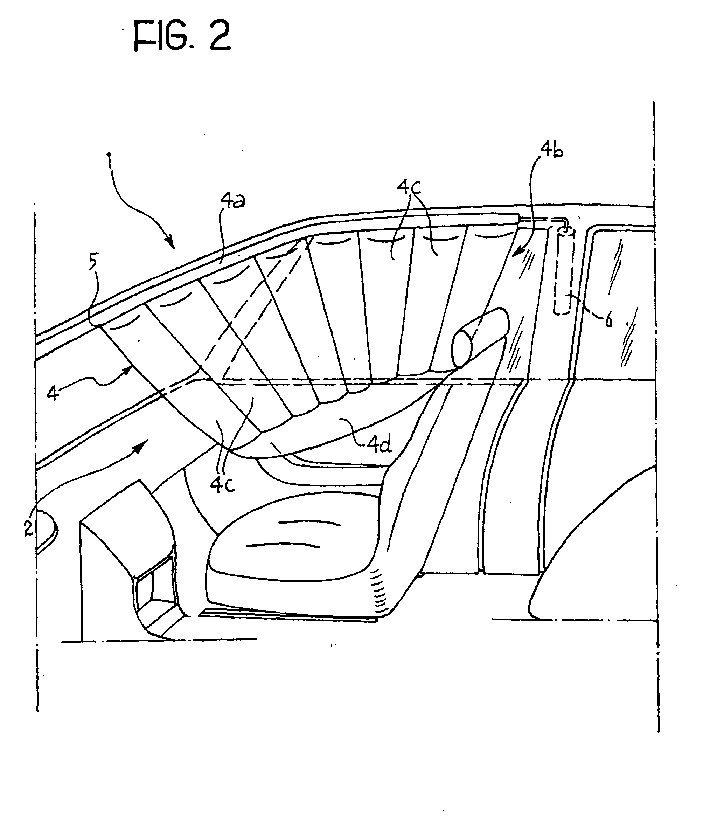

As will become clearer from the following, each safety restraint 2 or 3 comprises a respective airbag such as that indicated 4 in Figure 2, housed in a folded, stowage configuration in a respective housing 5 (Figure 1) formed in the passenger compartment roof and extending along an angled or arcuate line partially along a longitudinal edge of the roof and partially transversely relative to that edge.

In the embodiment shown in Figure 2, the airbag 4 of each restraint comprises an upper tubular element 4a restrained in the associated housing 5 and an intermediate portion 4b divided into a plurality of adjacent chambers 4c. These chambers communicate with the region inside the upper tubular portion 4a of the airbag. At the bottom, the intermediate portion 4b of the airbag 4 is connected to a tubular element 4d. The region inside this tubular element communicates with the region inside at least one of the chambers 4c of the intermediate portion of the airbag.

The lower tubular element 4d is formed in a manner such that, when inflated, it can expand radially and contract appreciably longitudinally so as to bring about a shortening of the lower portion of the airbag 4, as can be seen in Figure 2.

The lower tubular element 4d is formed, for example, by the technique known from the document "ITS - A New Restraint System for Side Impact Protection" by Y. Gershon et al., SAE Technical Paper Series No. 961018, International Congress & Exposition, Detroit, Michigan, 26-29th February 1996.

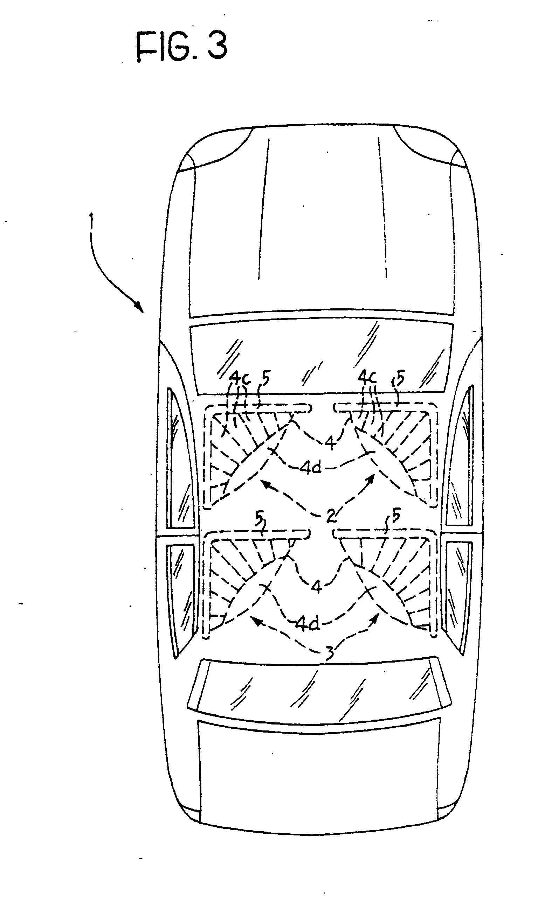

As stated above, in the inflated and unfolded condition of the airbag, the lower tubular element 4d contracts longitudinally, bringing about a shortening of the lower portion of the airbag and being disposed substantially along a diagonal or a chord, at an inclination to the longitudinal axis of the motor vehicle, as can be seen in Figure 3.

As can be appreciated from an observation of Figures 2 and 3, in the unfolded condition, each airbag 4 can thus offer protection to the occupant of the associated seat both in the event of a front impact and in the event of a side impact.

Naturally, a respective gas generator of known type such as that indicated 6 in Figure 2 is associated with each restraint 2 or 3. In the embodiment shown by way of example, the gas generators associated with the various restraints can be mounted in respective receptacles or housings provided in the side pillars or even in the roof itself. The gas generators associated with the restraints are activated when required, in known manner, by an electronic control unit, not shown, connected to sensors, also not shown, arranged to detect, in predetermined manner, the conditions in which it is appropriate to active the restraint or restraints.

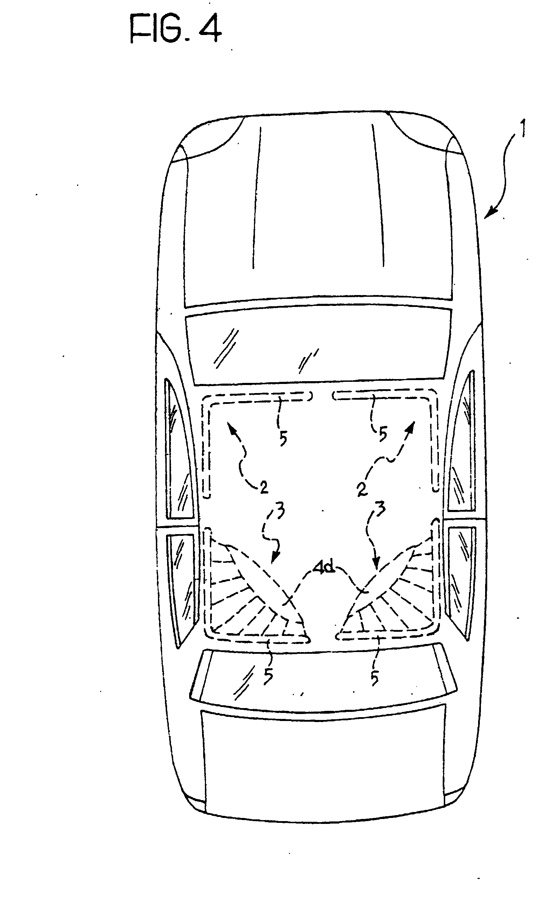

Figure 4 shows a motor car 1 in which each of the restraints 3 associated with the rear seats comprises a respective airbag which is similar to that described above and which is stored, in the stowage condition, in a corresponding housing 5 extending partially along a portion of the longitudinal edge of the passenger compartment roof and partially behind a rear passenger seat, in particular, adjacent the upper edge of the rear window.

In the embodiment of Figure 4, the rear restraints 3 are intended to be activated in the event of a side impact or a rear impact, in the latter case to protect the occupants of the rear seats from so-called "whiplash".

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A safety restraint (2, 3) for protecting a person in the passenger compartment of a motor vehicle (1), comprising a curtain-type airbag (4), which is housed, in a folded, stowage configuration, in a housing (5) formed along an edge of the passenger compartment roof and which can be inflated in order to adopt a configuration in which it is unfolded downwards as a result of the activation of an associated gas generator (6),
the restraint being **characterized in that** the housing (5) and the airbag (4) stowed therein extend along an angled or arcuate line (5), partially along a longitudinal edge of the passenger compartment roof and partially transversely relative to the longitudinal edge, and **in that** the airbag (4) includes a lower tubular element (4d) which, when inflated, can contract longitudinally in a manner such that, in the inflated and unfolded condition, it brings about a shortening of the lower portion of the airbag (4) and is disposed substantially along a diagonal or a chord, at an inclination to the longitudinal axis of the motor vehicle.

2. A motor vehicle (1) **characterized in that** it is provided with at least one restraint (2, 3) according to Claim 1.

3. A motor vehicle according to Claim 2, in which a restraint (2) is disposed in the front portion of the passenger compartment and the airbag (4), in the stowage condition, extends partially along a portion of the front edge of the passenger compartment roof, facing a front driver or passenger seat, and partially along the side edge of the roof, adjacent the seat.

4. A motor vehicle according to Claim 2 or Claim 3, in which a restraint (3) is provided in the rear portion of the passenger compartment and the airbag (4), in the stowed condition, extends partially along a transverse median line of the roof facing a rear passenger seat, and partially along a portion of the side edge of the roof adjacent the seat.

5. A motor vehicle according to Claim 2 or Claim 3, in which a restraint (3) is provided in the rear portion of the passenger compartment and the airbag (4), in the stowed condition, extends partially transversely behind a rear passenger seat and partially along a portion of the side edge of the roof adjacent the seat.

## Patentansprüche

1. Sicherheitsvorrichtung zur Bewegungsbegrenzung (2, 3), um eine Person im Fahrgastraum eines Kraftfahrzeugs (1) zu schützen, wobei die Sicherheitsvorrichtung zur Bewegungsbegrenzung einen vorhangartigen Airbag (4), der in einem zusammengefalteten, gestauten Zustand in einem Gehäuse (5) untergebracht ist, das entlang einer Kante des Dachs des Fahrgastraums ausgebildet ist, und der aufgeblasen werden kann, um einen Zustand einzunehmen, in dem er dadurch nach unten entfaltet wird, dass ein zugeordneter Gasgenerator (6) aktiviert wird,
wobei die Bewegungsbegrenzungsvorrichtung **dadurch gekennzeichnet ist, dass** das Gehäuse (5) und der darin gestaute Airbag (4) entlang einer abgewinkelten oder gebogenen Kurve (5) teilweise entlang einer Längskante des Dachs des Fahrgastraums und teilweise quer relativ zur Längskante verlaufen, und dass der Airbag (4) ein unteres rohrförmiges Element (4d) aufweist, das sich beim Aufblasen in Längsrichtung so zusammenziehen kann, dass es im aufgeblasenen und entfalteten Zustand ein Verkürzen des unteren Teils des Airbags (4) bewirkt, wobei es im Wesentlichen entlang einer Diagonale oder einer Sehne unter einer Neigung zur Längsachse des Kraftfahrzeugs angeordnet ist.

2. Kraftfahrzeug (1), **dadurch gekennzeichnet, dass** es mit zumindest einer Bewegungsbegrenzungsvorrichtung (2, 3) gemäß Anspruch 1 ausgestattet ist.

3. Kraftfahrzeug gemäß Anspruch 2, wobei eine Bewegungsbegrenzungsvorrichtung (2) im vorderen Teil des Fahrgastraums angeordnet ist und der Airbag (4) im gestauten Zustand teilweise entlang eines Teils der Vorderkante des Dachs des Fahrgastraums verläuft, der einem vorderen Lenkersitz oder Fahrgastsitz gegenüber liegt, und teilweise entlang der Seitenkante des Dachs neben dem Sitz verläuft.

4. Kraftfahrzeug gemäß Anspruch 2 oder Anspruch 3, wobei eine Bewegungsbegrenzungsvorrichtung (3) im hinteren Teil des Fahrgastraums vorgesehen ist und der Airbag (4) im gestauten Zustand teilweise entlang einer mittleren Querachse des Dachs gegenüber einem Rücksitz des Fahrgastes und teilweise entlang eines Teils der Seitenkante des Dachs neben dem Sitz verläuft.

5. Kraftfahrzeug gemäß Anspruch 2 oder Anspruch 3, wobei eine Bewegungsbegrenzungsvorrichtung (3) im hinteren Teil des Fahrgastraums vorgesehen ist und der Airbag (4) im gestauten Zustand teilweise quer hinter einem Rücksitz des Fahrgastes und teilweise entlang eines Teils der Seitenkante des Dachs neben dem Sitz verläuft.

## Revendications

1. Système de retenue de sécurité (2, 3) pour protéger une personne dans l'habitacle d'un véhicule à moteur (1), comprenant un airbag (4) du type à rideau, lequel est logé dans une configuration de rangement repliée, dans un boîtier (5) formé le long d'une bordure de la toiture de l'habitacle et qui peut être gonflé afin d'adopter une configuration dans laquelle il est déplié vers le bas en résultat de l'activation d'un générateur de gaz associé (6),
le système de retenue étant **caractérisé en ce que** le boîtier (5) et l'airbag (4) rangé dans celui-ci s'étendent le long d'une ligne (5) en angle ou arquée, partiellement le long d'une bordure longitudinale de la toiture de l'habitacle et partiellement transversalement par rapport à la bordure longitudinale, et **en ce que** l'airbag (4) inclut un élément tubulaire inférieur (4d) qui, lorsqu'il est gonflé, est capable de se contracter longitudinalement d'une manière telle que, dans la condition gonflée et dépliée, il entraîne un raccourcissement de la partie inférieure de l'airbag (4), et est disposé sensiblement le long d'une diagonale ou d'une corde, sous une inclinaison par rapport à l'axe longitudinal du véhicule à moteur.

2. Véhicule à moteur (1), **caractérisé en ce qu'**il est pourvu d'au moins un système de retenue (2, 3) selon la revendication 1.

3. Véhicule à moteur selon la revendication 2, dans lequel un système de retenue (2) est disposé dans la partie frontale de l'habitacle et l'airbag (4), dans la condition de rangement, s'étend partiellement le long d'une partie de la bordure frontale de la toiture de l'habitacle, en face d'un siège frontal de conducteur ou de passager, et partiellement le long de la bordure latérale de la toiture, en position adjacente au siège.

4. Véhicule à moteur selon l'une ou l'autre des revendications 2 et 3, dans lequel un système de retenue (3) est prévu dans la partie arrière de l'habitacle et l'airbag (4), dans la condition rangée, s'étend partiellement le long d'une ligne médiane transversale de la toiture en face d'un siège de passager arrière et partiellement le long d'une partie de la bordure latérale de la toiture adjacente au siège.

5. Véhicule à moteur selon l'une ou l'autre des revendications 2 et 3, dans lequel un système de retenue (3) est prévu dans la partie arrière de l'habitacle et l'airbag (4), dans la condition rangée, s'étend partiellement transversalement derrière un siège de passager arrière et partiellement le long d'une partie de la bordure latérale de la toiture adjacente au siège.
